# EUROPÄISCHE PATENTANMELDUNG

(11) **EP 2 499 994 A2**
(43) Veröffentlichungstag der Anmeldung: **19.09.2012**
(21) Anmeldenummer: 12155555.1
(22) Anmeldetag: 15.02.2012
(51) Int. Cl.: A61C 13/08, B23Q 3/00, B23Q 7/04

(54) **Bearbeitungsmaschine zur spanenden Bearbeitung eines Werkstücks oder eines Rohlings**

(30) Priorität: 18.03.2011 DE 102011005776
(71) Anmelder: Kaltenbach & Voigt GmbH, 88400 Biberach (DE)
(72) Erfinder: Gapp, Wolfgang, 88410 Bad Wurzach (DE); Schröer, Matthias, 89077 Ulm (DE)
(74) Vertreter: Thun, Clemens

(57) **Zusammenfassung**

Die Erfindung betrifft eine Bearbeitungsmaschine zur spanenden Bearbeitung eines Werkstücks oder eines Rohlings, insbesondere zur Herstellung eines Zahnersatzteils oder eines Gebissmodells. Die Bearbeitungsmaschine weist eine Spannzange zur Halterung eines Werkzeugs zu einer Bearbeitung des Werkstücks oder des Rohlings auf, sowie ein Werkzeugmagazin zur Bereithaltung von mehreren Werkzeugen, wobei die Bearbeitungsmaschine dazu ausgebildet ist, mit der Spannzange automatisch eines der in dem Werkzeugmagazin bereitgehaltenen Werkzeuge (4) aufzunehmen und wie zur Bearbeitung vorgesehen zu Haltern. Das Werkzeugmagazin weist ein Halteelement (6') zur Bereithaltung des einen Werkzeugs (4) auf, wobei das Halteelement (6') eine, zylinderförmig um eine Achse (L) ausgebildete, ringförmig geschlossene Führungsfläche (1.1) aufweist, die dazu ausgestaltet ist, einen Schaftbereich (4.1) des einen Werkzeugs (4) zu umschließen. Durch die ringförmige Führungsfläche (1.1) ist eine besonders sichere Halterung des Werkzeugs (4) ermöglicht.

## Beschreibung

Die Erfindung betrifft eine Bearbeitungsmaschine zur spanenden Bearbeitung eines Werkstücks oder eines Rohlings, insbesondere zur Herstellung eines Zahnersatzteils oder eines Gebissmodells, die eine Spannzange zur Halterung eines Werkzeugs zu einer Bearbeitung des Werkstücks oder des Rohlings aufweist, sowie ein Werkzeugmagazin zur Bereithaltung von mehreren Werkzeugen, wobei die Bearbeitungsmaschine dazu ausgebildet ist, mit der Spannzange automatisch eines der in dem Werkzeugmagazin bereitgehaltenen Werkzeuge aufzunehmen und wie zur Bearbeitung vorgesehen zu Haltern.

Aus der DE 10 2009 011 676 A1 ist eine derartige Bearbeitungsmaschine bekannt. Die für die Bearbeitungsmaschine vorgesehenen Werkzeuge weisen jeweils einen Hauptring und einen, etwas kleineren, Nebenring auf. Das Werkzeugmagazin umfasst einen inneren Flächenabschnitt und einen äußeren Flächenabschnitt, die jeweils Ausnehmungen aufweisen. Zur Halterung eines Werkzeugs in dem Werkzeugmagazin ist vorgesehen, dass das Werkzeug mit seinem Hauptring zwischen die beiden Flächenabschnitte und mit seinem Nebenring in die Ausnehmung im äußeren Flächenabschnitt eingesetzt wird.

Die Sicherheit der Halterung der Werkzeuge ist hierbei jedoch limitiert. Insbesondere besteht die Gefahr, dass die Werkzeuge derart durchhängen, dass es bei einer Aufnahme eines der Werkzeuge mit der Spannzange zu Problemen kommen kann.

Der Erfindung liegt die Aufgabe zugrunde, eine verbesserte Bearbeitungsmaschine anzugeben; insbesondere sollen bei einfacher Handhabung eine besonders zuverlässige Halterung der Werkzeuge in dem Werkzeugmagazin und/oder eine besonders sichere und zuverlässige Funktion der Bearbeitungsmaschine ermöglicht sein.

Diese Aufgabe wird gemäß der Erfindung mit den in den unabhängigen Ansprüchen genannten Gegenständen gelöst. Besondere Ausführungsarten der Erfindung sind in den abhängigen Ansprüchen angegeben.

Gemäß der Erfindung ist eine Bearbeitungsmaschine zur spanenden Bearbeitung eines Werkstücks oder eines Rohlings, insbesondere zur Herstellung eines Zahnersatzteils oder eines Gebissmodells, vorgesehen. Die Bearbeitungsmaschine weist eine Spannzange zur Halterung eines Werkzeugs zu einer Bearbeitung des Werkstücks oder des Rohlings auf, sowie ein Werkzeugmagazin zur Bereithaltung von mehreren Werkzeugen, wobei die Bearbeitungsmaschine dazu ausgebildet ist, mit der Spannzange automatisch eines der in dem Werkzeugmagazin bereitgehaltenen Werkzeuge aufzunehmen und wie zur Bearbeitung vorgesehen zu Haltern. Das Werkzeugmagazin weist ein Halteelement zur Bereithaltung des einen Werkzeugs auf, wobei das Halteelement eine, zylinderförmig um eine Achse ausgebildete, ringförmig geschlossene Führungsfläche aufweist, die dazu ausgestaltet ist, einen Schaftbereich des einen Werkzeugs zu umschließen.

Durch die ringförmige Führungsfläche ist eine besonders sichere Halterung des Werkzeugs ermöglicht.

Vorteilhaft weist das Halteelement außerdem eine weitere Führungsfläche auf, wobei die weitere Führungsfläche von der Achse einen größeren Abstand aufweist als die zuerst genannte Führungsfläche und dazu ausgestaltet ist, ein ringförmig um den Schaftbereich des Werkzeugs angeordnetes Ringelement des Werkzeugs führend zu umschließen. Hierdurch ist eine besonders gute Lagesicherung des Werkzeugs relativ zu dem Halteelement ermöglicht.

Vorteilhaft weist das Halteelement ein Rastelement für eine Rastverbindung zwischen dem einen Werkzeug einerseits und dem Halteelement andererseits auf. Hierdurch ist ein vergleichsweise einfaches Bestücken des Werkzeugmagazins mit dem Werkzeug ermöglicht. Vorteilhaft umfasst das Rastelement einen Drahtring oder Rastkugeln.

Weiterhin vorteilhaft weist das Werkzeugmagazin eine Durchgangsöffnung, vorzugsweise eine Bohrung, auf, wobei das Halteelement derart in die Durchgangsöffnung eingesetzt ist, dass das Halteelement mit Bezug auf die Achse in eine Querrichtung mit einem geringen Spiel gelagert ist. Hierdurch können Ungenauigkeiten beim Ein- und Ausführen des einen Werkzeugs in das bzw. aus dem Halteelement kompensiert werden. Weiterhin vorteilhaft ist dabei das Halteelement in der Durchgangsöffnung unter einer Vorspannung gelagert. Hierdurch lässt sich erzielen, dass sich die Lage des einen Werkzeugs nicht in ungewollter Weise durch eine leichte Erschütterung oder das Eigengewicht des Halteelements ändert.

Weiterhin vorteilhaft weist die Bearbeitungsmaschine außerdem einen Werkzeugmagazin-Halter auf, der dazu ausgebildet ist, das Werkzeugmagazin zur Bereithaltung der mehreren Werkzeuge in einer vorgesehenen Relativposition zu halten. Insbesondere ist dabei die Bearbeitungsmaschine derart ausgestaltet, dass das Werkzeugmagazin reversibel, vorzugsweise werkzeuglos, von dem Werkzeugmagazin-Halter separiert und anschließend wieder in die vorgesehene Relativposition gebracht werden kann. Hierdurch ist ermöglicht, dass mehrere Werkzeugmagazine verwendet werden können. Außerdem ist eine Bestückung des Werkzeugmagazins außerhalb der Bearbeitungsmaschine ermöglicht.

Das Werkzeugmagazin kann für jedes der mehreren Werkzeuge jeweils ein entsprechendes Halteelement aufweisen.

Dadurch, dass eine besonders sichere Halterung des Werkzeugs in dem Werkzeugmagazin ermöglicht ist, lässt sich praktisch verhindern, dass bei einem Entnehmen des mit dem einem Werkzeug versehenen Werkzeugmagazins aus der Bearbeitungsmaschine oder bei einem entsprechenden Wiedereinsetzen des Werkzeugmagazins in die Bearbeitungsmaschine das Werkzeug aus dem Werkzeugmagazin herausfällt oder in ungewollter Weise seine vorgesehene Relativlage zu dem Halteelement verändert.

Weiterhin vorteilhaft weist der Werkzeugmagazin-Halter einen Laserstrahler zur Erzeugung eines Laserstrahls auf, wobei die Bearbeitungsmaschine derart ausgestaltet ist, dass der Laserstrahl unterbrochen ist, wenn sich das Werkzeugmagazin relativ zu dem Werkzeugmagazin-Halter in einer Position befindet, die nicht die vorgesehene Relativposition ist. Hierdurch lässt sich automatisch erfassen, ob sich das Werkzeugmagazin in der vorgesehenen Relativposition befindet, also ob mit anderen Worten das Werkzeugmagazin wie vorgesehen in den Werkzeugmagazin-Halter eingesetzt ist. Durch die Ausgestaltung mit einem Laserstrahler lässt sich weiterhin die Überprüfung der vorgesehenen Relativposition mittels einer Software realisieren. Außerdem ist durch den Laserstrahl eine Vermessung der mehreren Werkzeuge ermöglicht. Die Werkzeuge lassen sich auf diese Weise werkzeugnah vermessen; hierdurch sind besonders kurze Verfahrwege bzw. Verfahrzeiten ermöglicht.

Vorteilhaft weist das Werkzeugmagazin hierzu eine Blende auf, durch die der Laserstrahl unterbrochen ist, wenn sich das Werkzeugmagazin in der Position relativ zu dem Werkzeugmagazin-Halter befindet, die nicht die vorgesehene Relativposition ist.

Gemäß einem weiteren Aspekt der Erfindung ist eine Bearbeitungsmaschine zur spanenden Bearbeitung eines Werkstücks oder eines Rohlings, insbesondere zur Herstellung eines Zahnersatzteils oder eines Gebissmodells, vorgesehen. Die Bearbeitungsmaschine weist eine Spannzange zur Halterung eines Werkzeugs zu einer Bearbeitung des Werkstücks oder des Rohlings auf, sowie ein Werkzeugmagazin zur Bereithaltung von mehreren Werkzeugen, wobei die Bearbeitungsmaschine dazu ausgebildet ist, mit der Spannzange automatisch eines der in dem Werkzeugmagazin bereitgehaltenen Werkzeuge aufzunehmen und wie zur Bearbeitung vorgesehen zu Haltern. Weiterhin weist die Bearbeitungsmaschine einen Werkzeugmagazin-Halter auf, der dazu ausgebildet ist, das Werkzeugmagazin zur Bereithaltung der mehreren Werkzeuge in einer vorgesehenen Relativposition zu halten. Die Bearbeitungsmaschine ist dabei derart ausgestaltet, dass das Werkzeugmagazin reversibel, vorzugsweise werkzeuglos, von dem Werkzeugmagazin-Halter separiert und anschließend wieder in die Relativposition gebracht werden kann.

Gemäß einem noch weiteren Aspekt der Erfindung ist eine Bearbeitungsmaschine zur spanenden Bearbeitung eines Werkstücks oder eines Rohlings, insbesondere zur Herstellung eines Zahnersatzteils oder eines Gebissmodells, vorgesehen. Die Bearbeitungsmaschine weist eine Spannzange zur Halterung eines Werkzeugs zu einer Bearbeitung des Werkstücks oder des Rohlings auf, sowie ein Werkzeugmagazin zur Bereithaltung von mehreren Werkzeugen, wobei die Bearbeitungsmaschine dazu ausgebildet ist, mit der Spannzange automatisch eines der in dem Werkzeugmagazin bereitgehaltenen Werkzeuge aufzunehmen und wie zur Bearbeitung vorgesehen zu Haltern. Außerdem weist die Bearbeitungsmaschine einen Werkzeugmagazin-Halter auf, der dazu ausgebildet ist, das Werkzeugmagazin zur Bereithaltung der mehreren Werkzeuge in einer vorgesehenen Relativposition zu halten. Der Werkzeugmagazin-Halter weist dabei einen Laserstrahler zur Erzeugung eines Laserstrahls auf, wobei die Bearbeitungsmaschine derart ausgestaltet ist, dass der Laserstrahl unterbrochen ist, wenn sich das Werkzeugmagazin relativ zu dem Werkzeugmagazin-Halter in einer Position befindet, die nicht die vorgesehene Relativposition ist. Vorzugsweise weist dabei das Werkzeugmagazin eine Blende auf, durch die der Laserstrahl unterbrochen ist, wenn sich das Werkzeugmagazin in der Position befindet, die nicht die vorgesehene Relativposition ist.

Gemäß einem noch weiteren Aspekt der Erfindung ist ein System vorgesehen, das eine erfindungsgemäße Bearbeitungsmaschine, sowie das eine Werkzeug umfasst.

Die Erfindung wird im Folgenden anhand von Ausführungsbeispielen und mit Bezug auf die Zeichnungen näher erläutert. Es zeigen:
- Fig. 1: ein Werkzeugmagazin einer erfindungsgemäßen Bearbeitungsmaschine,
- Fig. 2: eine perspektivische Schnittdarstellung durch ein Halteelement des Werkzeugmagazins,
- Fig. 3: einen Abschnitt eines Werkzeugs mit einem Aufpressring zum Einsetzen in das Halteelement,
- Fig. 4: einen Querschnitt durch eine Variante eines Halteelements und eines darin eingesetzten Werkzeugs,
- Fig. 5: einen Querschnitt durch das separierte Halteelement gemäß der Variante,
- Fig. 6: eine Seitenansicht des Werkzeugmagazins mit dem Halteelement,
- Fig. 7: eine Frontalansicht des Werkzeugmagazins und
- Fig. 8: eine Frontalansicht des in der vorgesehenen Relativposition in den Werkzeugmagazin-Halter eingesetzten Werkzeugmagazins.

Die Erfindung betrifft eine (in den Figuren nicht insgesamt gezeigte) Bearbeitungsmaschine, wie sie beispielsweise in der DE 10 2009 011 676 A1 beschrieben ist. Bei der Bearbeitungsmaschine kann es sich um eine Fräs-/Schleifmaschine handeln. Die Bearbeitungsmaschine dient zur spanenden bzw. abhebenden Bearbeitung eines Werkstücks oder eines Rohlings, insbesondere zur Herstellung eines Zahnersatzteils oder eines Gebissmodells.

Die Bearbeitungsmaschine weist eine Spannzange auf, die insbesondere in an sich bekannter Weise an einem Fräskopf der Bearbeitungsmaschine angeordnet sein kann, wobei die Spannzange dazu ausgebildet ist, ein Werkzeug zu einer spanenden bzw. abhebenden Bearbeitung des Werkstücks bzw. des Rohlings in an sich bekannter Weise zu haltern. Bei dem Werkzeug kann es sich beispielsweise um ein Bohr- oder Schleifwerkzeug handeln.

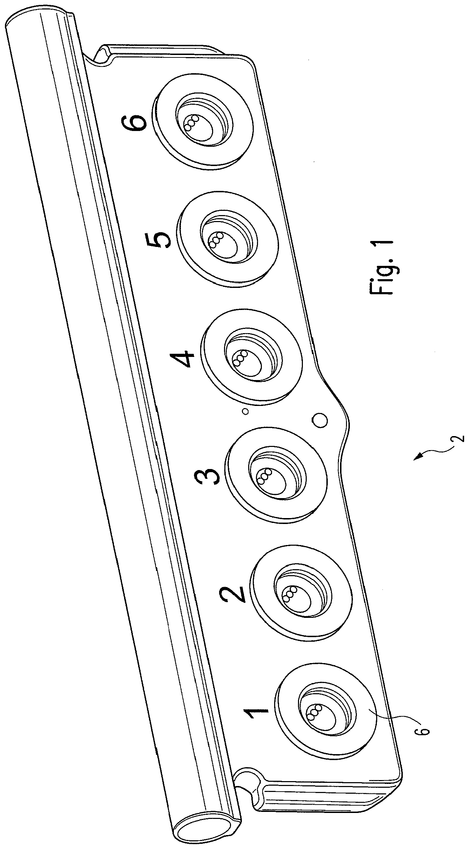

Weiterhin weist die Bearbeitungsmaschine ein - exemplarisch in Fig. 1 gezeigtes - Werkzeugmagazin 2 auf Das Werkzeugmagazin 2 dient zur Bereithaltung mehrerer Werkzeuge, die zur Bearbeitung des Rohlings bzw. Werkstücks dienen können. In Fig. 1 ist das Werkzeugmagazin 2 ohne Werkzeuge, also "unbestückt" dargestellt.

Die Bearbeitungsmaschine ist dabei dazu ausgebildet, mit der Spannzange automatisch eines der in dem Werkzeugmagazin 2 bereitgehaltenen Werkzeuge aufzunehmen und wie für die Bearbeitung des Werkstücks bzw. des Rohlings vorgesehen zu haltern. Die Werkzeuge befinden sich also, wenn sie wie vorgesehen an dem Werkzeugmagazin zur Bereithaltung angeordnet sind, in einer "Bereitschaftsstellung", aus der sie unmittelbar automatisch von der Spannzange aufgenommen werden können.

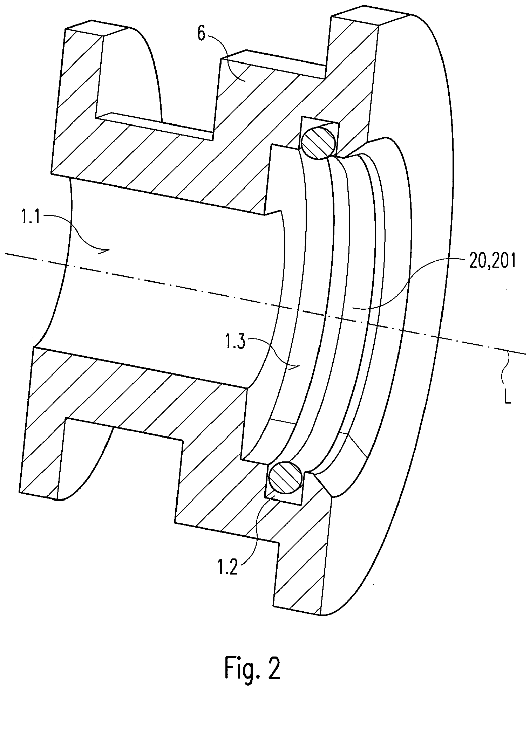

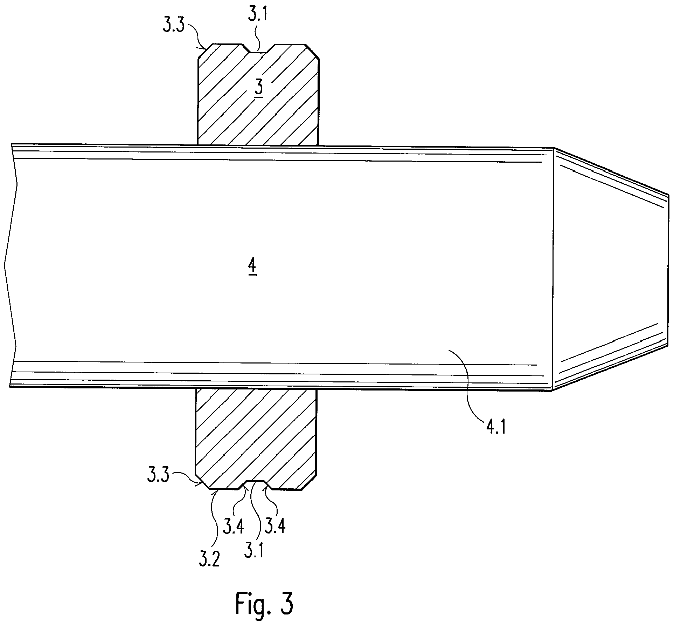

Das Werkzeugmagazin 2 weist ein - exemplarisch im perspektivischen Schnitt in Fig. 2 gezeigtes - Halteelement 6 zur Bereithaltung eines - exemplarisch abschnittweise in Fig. 3 gezeigten - Werkzeugs 4 auf. Das Halteelement 6 weist hierzu eine zylinderförmig um eine Achse L ausgebildete, ringförmig geschlossene Führungsfläche 1.1 auf. Die Führungsfläche 1.1 ist dazu ausgebildet, einen Schaftbereich 4.1 des Werkzeugs 4 führend zu umschließen, insbesondere, wenn der Schaftbereich 4.1 mit seiner Längsachse parallel zu der Achse L orientiert ist.

Insbesondere ist vorgesehen, dass die Führungsfläche 1.1 den Schaftbereich 4.1 des Werkzeugs 4 spielarm bzw. mit lediglich geringem Bewegungsspiel führt. Hierdurch lässt sich insbesondere vermeiden, dass das Werkzeug 4 durchhängt; auf diese Weise wird ermöglicht, dass das automatische Aufnehmen des Werkzeugs 4 durch die bzw. mit der Spannzange erleichtert ist bzw. Probleme beim Aufnehmen vermieden werden können.

Vorteilhaft weist das Halteelement 6 außerdem eine weitere Führungsfläche 1.3 auf, wobei die weitere Führungsfläche 1.3 von der Achse L einen größeren Abstand aufweist, als die zuerst genannte Führungsfläche 1.1. Die weitere Führungsfläche 1.3 ist dabei dazu ausgestaltet, ein ringförmig um den Schaftbereich 4.1 des Werkzeugs 4 angeordnetes Ringelement 3 des Werkzeugs 4 zu umschließen. Bei dem Ringelement 3 kann es sich insbesondere um einen Aufpressring handeln. Insbesondere kann vorgesehen sein, dass die weitere Führungsfläche 1.3 eine Mantelfläche des Ringelements 3 bzw. des Aufpressrings spielarm bzw. mit lediglich geringem Bewegungsspiel führend umschließt. Hierdurch ist eine besonders gute Lagesicherung des Werkzeugs 4 relativ zu dem Halteelement 6 ermöglicht.

Vorzugsweise ist die weitere Führungsfläche 1.3 hierzu ringförmig geschlossen um die Achse L ausgebildet. Sowohl die zuerst genannte Führungsfläche 1.1, als auch die weitere Führungsfläche 1.3 können vorteilhaft kreiszylindrisch geformt sein. Dies ist insbesondere von Vorteil, wenn der Schaftbereich 4.1 bzw. das Ringelement 3 entsprechend kongruente, kreiszylindrische Außenflächen aufweisen.

Vorzugsweise weist das Halteelement 6 weiterhin ein Rastelement 20 für eine Rastverbindung zwischen dem Werkzeug 4 einerseits und dem Halteelement 6 andererseits auf. Bei dem Rastelement 20 kann es sich beispielsweise - wie in Fig. 2 gezeigt - um ein ringförmiges Rastelement, beispielsweise in Form eines Drahtrings 201, handeln. Das Rastelement 20 kann in einer umlaufend ausgebildeten Nut 1.2 angeordnet bzw. eingesetzt sein, die vorzugsweise in der weiteren Führungsfläche 1.3 ausgebildet ist. Das ringförmige Rastelement 20 kann also dazu ausgebildet sein, das Ringelement 3 des Werkzeugs 4 zu umschließen und festzuhalten, wenn sich das Werkzeug 4, wie vorgesehen, in seiner Bereitschaftsposition in dem Halteelement 6 befindet, also in dem Werkzeugmagazin 2 bereitgehalten wird, um von der Spannzange aufgenommen werden zu können.

Durch das Ringelement 3 bzw. den Aufpressring lässt sich erzielen, dass ein selbstständiges Herausfallen des Werkzeugs 4 aus dem Halteelement 6 bzw. aus dem Werkzeugmagazin 2 verhindert werden kann. Insbesondere kann das Ringelement 3 hierzu an einer Außenmantelfläche 3.2 eine Nut 3.1 aufweisen, in die beim Einsetzen des Werkzeugs 4 in das Halteelement 6 das Rastelement 20 einschnappen kann.

Weiterhin kann das Ringelement 3 an seiner Außenmantelfläche 3.2 eine Fasenfläche 3.3 aufweisen, beispielsweise 45° gegenüber der Außenmantelfläche 3.2 geneigt. Hierdurch ist ein Bewegen des Werkzeugs 4 in seine Bereitschaftsposition in dem Halteelement 6 und somit das Bestücken des Werkzeugmagazins 2 erleichtert.

Die Nut 3.1 kann Fasenflächen 3.4 aufweisen, beispielsweise 45° gegenüber der Außenmantelfläche 3.2 geneigt, wodurch ein Entnehmen des Werkzeugs 4 aus der Bereitschaftsposition erleichtert ist.

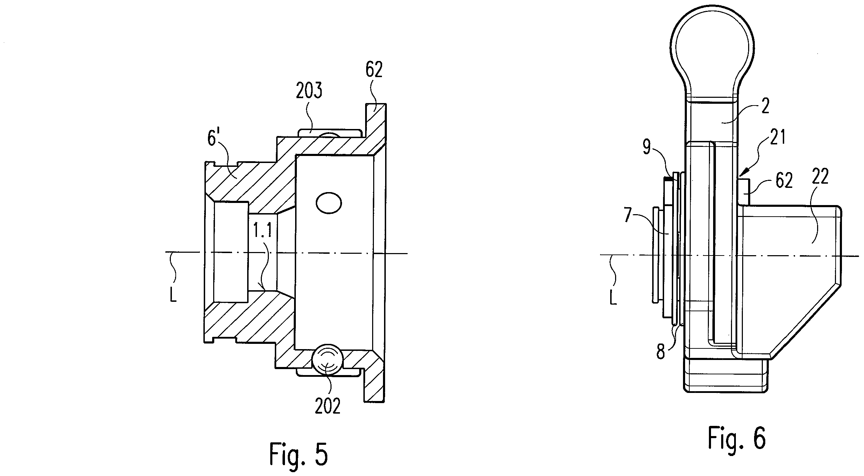

In Fig. 5 ist ein Halteelement 6' gemäß einer Variation gezeigt. Hierbei sind als Rastelement 20 mehrere, vorzugsweise wenigstens drei Rastkugeln 202 vorgesehen, die beispielsweise jeweils einen Durchmesser von zwischen 1 mm und 2 mm aufweisen können. Die Rastkugeln 202 können von einer Ringfeder 203 des Halteelements 6' gehalten werden. Die Ausführung ist vorzugsweise derart, dass durch ein in das Halteelement 6' eingesetztes Werkzeug 4 mit einem entsprechend großen Ringelement 3 bzw. Aufpressring die Rastkugeln 202 mit Bezug auf die Achse L radial nach außen gegen die Ringfeder 203 gedrückt werden und hierdurch die Rastverbindung hergestellt ist.

Die zum entsprechenden Stecken und Ziehen des Werkzeugs 4 erforderliche Kraft lässt sich durch entsprechende Wahl des Durchmessers des Ringelements 3 einstellen.

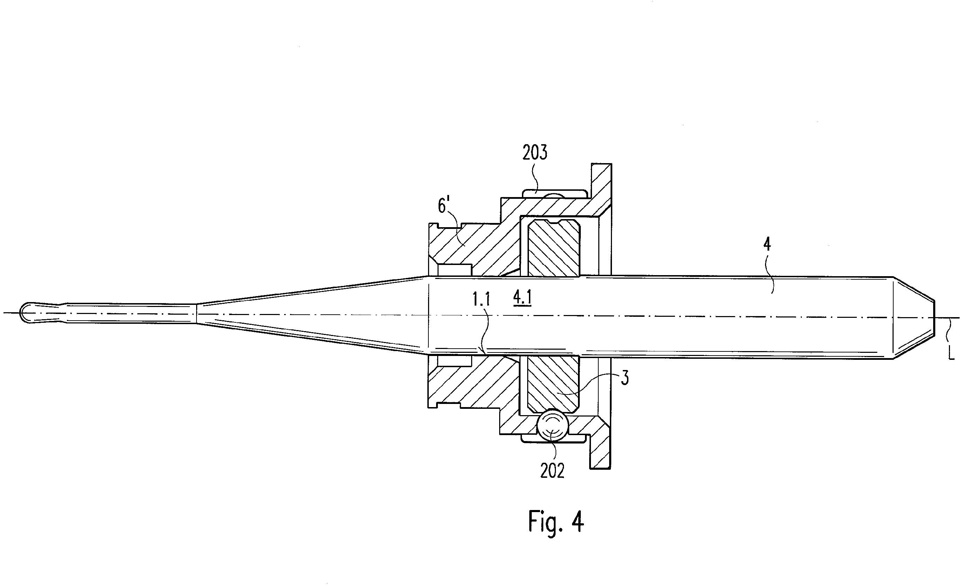

In Fig. 4 ist ein Querschnitt gezeigt, der das Halteelement 6' gemäß der Variation mit dem darin eingesetzten Werkzeug 4 zeigt. Über die Führungsfläche 1.1 lässt sich der Schaftbereich 4.1 des Werkzeugs 4 spielarm führen. Dadurch kann das Werkzeug 4 nicht durchhängen, wodurch dessen Aufnahme durch die Spannzange erleichtert ist.

Durch das Ringelement 3 bzw. den Aufpressring lässt sich ein selbstständiges Herausfallen des Werkzeugs 4 aus dem Halteelement 6' gemäß der Variation verhindern. Hierzu schnappen die Rastkugeln 202 in die umlaufende Nut 3.1 des Ringelements 3 ein. In Fig. 4 ist auch zu sehen, wie der Werkzeugschaft 4.1 über die Führungsfläche 1.1 spielarm geführt wird.

Fig. 6 zeigt eine Seitenansicht des Werkzeugmagazins 2 mit dem Halteelement 6, 6'. Vorteilhaft weist das Werkzeugmagazin 2 eine Durchgangsöffnung 21, vorzugsweise eine Bohrung, auf, in die das Halteelement 6, 6' eingesetzt ist. Dabei sind die Form und Größe bzw. der Durchmesser der Durchgangsöffnung 21 derart gewählt, dass das darin eingesetzte Halteelement 6, 6' mit Bezug auf die Achse L in eine Querrichtung mit einem geringen Spiel gelagert ist. Hierdurch können Ungenauigkeiten beim Ein-und Ausführen des Werkzeugs 4 in das bzw. aus dem Halteelement 6, 6' kompensiert werden.

Weiterhin vorteilhaft ist dabei das Halteelement 6, 6' in der Durchgangsöffnung 21 unter einer Vorspannung gelagert. Hierdurch lässt sich erzielen, dass sich die Lage des Werkzeugs 4 nicht in ungewollter Weise durch eine leichte Erschütterung oder das Eigengewicht des Halteelements 6, 6' ändert.

Hierzu kann vorgesehen sein, dass das Halteelement 6, 6' über einen Sicherungsring 7 im Werkzeugmagazin 2 gehalten ist. Beispielsweise kann das Halteelement 6, 6' einen Flansch 62 aufweisen, mit dem es auf einer ersten Seite der Durchgangsöffnung 21 sich an einer Außenfläche des Werkzeugmagazins 2 abstützend anliegt, wobei auf der anderen Seite der Durchgangsöffnung 21 der Sicherungsring 7 vorgesehen ist.

Die Bohrung kann beispielsweise zwischen 0,5 mm und 2 mm, insbesondere ca. 1 mm größer sein als der Durchmesser des Halteelements 6, 6' an der betreffenden Stelle, um das Bewegungsspiel quer zur Richtung der Achse L zu realisieren. Zur Erzeugung der Vorspannung können beispielsweise zwei Passscheiben 8 und eine Kugellagerausgleichsscheibe 9 zwischen dem Sicherungsring 7 und dem Werkzeugmagazin 2 eingesetzt sein.

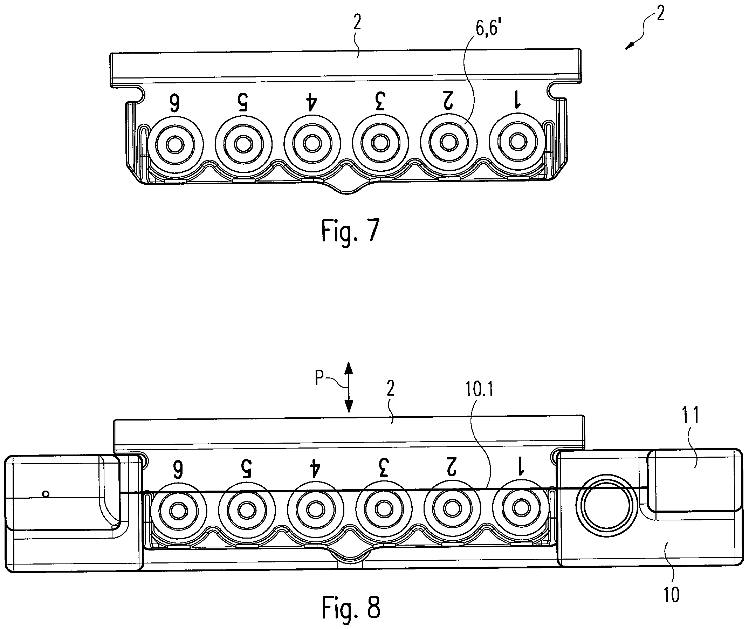

In Fig. 7 ist eine Frontalansicht des Werkzeugmagazins 2 gezeigt. Das Werkzeugmagazin 2 kann beispielsweise insgesamt sechs Halteelemente 6, 6' zur Halterung jeweils eines Werkzeugs aufweisen. Vorteilhaft ist das Werkzeugmagazin 2 aus der Bearbeitungsmaschine entnehmbar. Das Entnehmen hat dabei den Vorteil, dass mehrere Werkzeugmagazine verwendet werden können und außerdem eine Bestückung des Werkzeugmagazins 2 mit Werkzeugen außerhalb der Bearbeitungsmaschine ermöglicht ist. Hierdurch ist die Handhabung vereinfacht.

Beispielsweise kann die Bearbeitungsmaschine hierzu einen, exemplarisch in Fig. 8 gezeigten, Werkzeugmagazin-Halter 10 aufweisen, der dazu ausgebildet ist, das Werkzeugmagazin 2 zur Bereithaltung der mehreren Werkzeuge in einer vorgesehenen Relativposition zu dem Werkzeugmagazin-Halter 10 zu halten. Beispielsweise kann vorgesehen sein, dass das Werkzeugmagazin 2, wie durch den Doppelpfeil P angedeutet, in den Werkzeugmagazin-Halter 10 eingesetzt werden kann bzw. aus diesem entnommen werden kann. Dabei ist die Bearbeitungsmaschine derart ausgestaltet ist, dass das Werkzeugmagazin 2 reversibel, vorzugsweise werkzeuglos, von dem Werkzeugmagazin-Halter 10 separiert und anschließend wieder in die vorgesehene Relativposition gebracht werden kann.

In Fig. 8 ist das Werkzeugmagazin 2 in der vorgesehenen Relativposition zu dem Werkzeugmagazin-Halter 10 gezeigt, also in dem Zustand, in dem das Werkzeugmagazin 2 wie vorgesehen in den Werkzeugmagazin-Halter 10 eingesetzt ist.

Weiterhin vorteilhaft weist der Werkzeugmagazin-Halter 10 einen Laserstrahler 11 zur Erzeugung eines Laserstrahls 10.1 auf, wobei die Bearbeitungsmaschine derart ausgestaltet ist, dass der Laserstrahl 10.1 unterbrochen ist, wenn sich das Werkzeugmagazin 2 in einer Position relativ zu dem Werkzeugmagazin-Halter 10 befindet, die nicht die vorgesehene Relativposition ist. Hierdurch lässt sich automatisch erfassen, ob sich das Werkzeugmagazin 2 in der vorgesehenen Relativposition befindet, also ob mit anderen Worten das Werkzeugmagazin 2 wie vorgesehen in den Werkzeugmagazin-Halter 10 eingesetzt ist.

Durch die Ausgestaltung mit einem Laserstrahler 11 ist außerdem eine Vermessung der mehreren, in dem Werkzeugmagazin 2 eingesetzten (in Fig. 8 nicht gezeigten) Werkzeuge ermöglicht. Die Werkzeuge lassen sich auf diese Weise werkzeugnah vermessen; hierdurch sind besonders kurze Verfahrwege bzw. Verfahrzeiten ermöglicht.

Vorteilhaft weist das Werkzeugmagazin 2 hierzu eine, exemplarisch in Fig. 6 bezeichnete, Blende 22 auf, durch die der Laserstrahl 10.1 unterbrochen ist, wenn sich das Werkzeugmagazin 2 in der Position befindet, die nicht die vorgesehene Relativposition ist.

Gemäß dem Stand der Technik muss das Werkzeug einen vorgegebenen Punkt in der Bearbeitungsmaschine anfahren, um die Vermessung durchzuführen. Daraus ergeben sich vergleichsweise lange Verfahrwege und -zeiten. Gemäß der vorliegenden Ausgestaltung kann der Laserstrahl 10.1 quasi "direkt", beispielsweise ca. 5 mm, über den Werkzeugen liegen, so dass jedes Werkzeug nur 5 mm verfahren werden muss.

## Patentansprüche

1. Bearbeitungsmaschine zur spanenden Bearbeitung eines Werkstücks oder eines Rohlings, insbesondere zur Herstellung eines Zahnersatzteils oder eines Gebissmodells, aufweisend
- eine Spannzange zur Halterung eines Werkzeugs zu einer Bearbeitung des Werkstücks oder des Rohlings,
- ein Werkzeugmagazin (2) zur Bereithaltung von mehreren Werkzeugen, wobei die Bearbeitungsmaschine dazu ausgebildet ist, mit der Spannzange automatisch eines der in dem Werkzeugmagazin (2) bereitgehaltenen Werkzeuge aufzunehmen und wie zur Bearbeitung vorgesehen zu Haltern,
**dadurch gekennzeichnet,**
**dass** das Werkzeugmagazin (2) ein Halteelement (6, 6') zur Bereithaltung des einen Werkzeugs (4) aufweist, wobei das Halteelement (6, 6') eine, zylinderförmig um eine Achse (L) ausgebildete, ringförmig geschlossene Führungsfläche (1.1) aufweist, die dazu ausgestaltet ist, einen Schaftbereich (4.1) des einen Werkzeugs (4) zu umschließen.

2. Bearbeitungsmaschine nach Anspruch 1,
bei der das Halteelement (6, 6') außerdem eine weitere Führungsfläche (1.3) aufweist, wobei die weitere Führungsfläche (1.3) von der Achse (L) einen größeren Abstand aufweist als die zuerst genannte Führungsfläche (1.1) und dazu ausgestaltet ist, ein ringförmig um den Schaftbereich (4.1) des Werkzeugs (4) angeordnetes Ringelement (3) des Werkzeugs (4) führend zu umschließen.

3. Bearbeitungsmaschine nach Anspruch 1 oder 2,
bei der das Halteelement (6, 6') ein Rastelement (20) für eine Rastverbindung zwischen dem einen Werkzeug (4) einerseits und dem Halteelement (6, 6') andererseits aufweist.

4. Bearbeitungsmaschine nach Anspruch 3,
bei dem das Rastelement (20) ein Drahtring (201) oder Rastkugeln (202) umfasst.

5. Bearbeitungsmaschine nach einem der vorhergehenden Ansprüche,
bei der das Werkzeugmagazin (2) eine Durchgangsöffnung (21), vorzugsweise eine Bohrung, aufweist und das Halteelement (6, 6') derart in der Durchgangsöffnung (21) eingesetzt ist, dass das Halteelement (6, 6') mit Bezug auf die Achse (L) in eine Querrichtung mit einem geringen Spiel gelagert ist.

6. Bearbeitungsmaschine nach Anspruch 5,
bei der das Halteelement (6, 6') in der Durchgangsöffnung (21) unter einer Vorspannung gelagert ist.

7. Bearbeitungsmaschine nach einem der vorhergehenden Ansprüche, weiterhin aufweisend
- einen Werkzeugmagazin-Halter (10), der dazu ausgebildet ist, das Werkzeugmagazin (2) zur Bereithaltung der mehreren Werkzeuge in einer vorgesehenen Relativposition zu halten.

8. Bearbeitungsmaschine nach Anspruch 7,
die derart ausgestaltet ist, dass das Werkzeugmagazin (2) reversibel, vorzugsweise werkzeuglos, von dem Werkzeugmagazin-Halter (10) separiert und anschließend wieder in die vorgesehene Relativposition gebracht werden kann.

9. Bearbeitungsmaschine nach Anspruch 7 oder 8,
bei der der Werkzeugmagazin-Halter (10) einen Laserstrahler (11) zur Erzeugung eines Laserstrahls (10.1) aufweist, wobei die Bearbeitungsmaschine derart ausgestaltet ist, dass der Laserstrahl (10.1) unterbrochen ist, wenn sich das Werkzeugmagazin (2) relativ zu dem Werkzeugmagazin-Halter (10) in einer Position befindet, die nicht die vorgesehene Relativposition ist.

10. Bearbeitungsmaschine nach Anspruch 9,
bei der das Werkzeugmagazin (2) eine Blende (22) aufweist, durch die der Laserstrahl (10.1) unterbrochen ist, wenn sich das Werkzeugmagazin (2) relativ zu dem Werkzeugmagazin-Halter (10) in der Position befindet, die nicht die vorgesehene Relativposition ist.

11. Bearbeitungsmaschine zur spanenden Bearbeitung eines Werkstücks oder eines Rohlings, insbesondere zur Herstellung eines Zahnersatzteils oder eines Gebissmodells, aufweisend
- eine Spannzange zur Halterung eines Werkzeugs zu einer Bearbeitung des Werkstücks oder des Rohlings,
- ein Werkzeugmagazin (2) zur Bereithaltung von mehreren Werkzeugen, wobei die Bearbeitungsmaschine dazu ausgebildet ist, mit der Spannzange automatisch eines der in dem Werkzeugmagazin (2) bereitgehaltenen Werkzeuge aufzunehmen und wie zur Bearbeitung vorgesehen zu Haltern,
- einen Werkzeugmagazin-Halter (10), der dazu ausgebildet ist, das Werkzeugmagazin (2) zur Bereithaltung der mehreren Werkzeuge in einer vorgesehenen Relativposition zu halten,
**dadurch gekennzeichnet,**
**dass** die Bearbeitungsmaschine derart ausgestaltet ist, dass das Werkzeugmagazin (2) reversibel, vorzugsweise werkzeuglos, von dem Werkzeugmagazin-Halter (10) separiert und anschließend wieder in die Relativposition gebracht werden kann.

12. Bearbeitungsmaschine zur spanenden Bearbeitung eines Werkstücks oder eines Rohlings, insbesondere zur Herstellung eines Zahnersatzteils oder eines Gebissmodells, aufweisend
- eine Spannzange zur Halterung eines Werkzeugs zu einer Bearbeitung des Werkstücks oder des Rohlings,
- ein Werkzeugmagazin (2) zur Bereithaltung von mehreren Werkzeugen, wobei die Bearbeitungsmaschine dazu ausgebildet ist, mit der Spannzange automatisch eines der in dem Werkzeugmagazin (2) bereitgehaltenen Werkzeuge aufzunehmen und wie zur Bearbeitung vorgesehen zu Haltern,
- einen Werkzeugmagazin-Halter (10), der dazu ausgebildet ist, das Werkzeugmagazin zur Bereithaltung der mehreren Werkzeuge in einer vorgesehenen Relativposition zu halten,
**dadurch gekennzeichnet,**
**dass** der Werkzeugmagazin-Halter einen Laserstrahler (11) zur Erzeugung eines Laserstrahls (10.1) aufweist, wobei die Bearbeitungsmaschine derart ausgestaltet ist, dass der Laserstrahl (10.1) unterbrochen ist, wenn sich das Werkzeugmagazin (2) relativ zu dem Werkzeugmagazin-Halter (10) in einer Position befindet, die nicht die vorgesehene Relativposition ist.

13. Bearbeitungsmaschine nach Anspruch 12,
bei der das Werkzeugmagazin (2) eine Blende (22) aufweist, durch die der Laserstrahl (10.1) unterbrochen ist, wenn sich das Werkzeugmagazin (2) relativ zu dem Werkzeugmagazin-Halter (10) in der Position befindet, die nicht die vorgesehene Relativposition ist.

14. System, aufweisend
eine Bearbeitungsmaschine nach einem der vorhergehenden Ansprüche und das eine Werkzeug.
